# EUROPEAN PATENT SPECIFICATION

(11) **EP 1 551 672 B1**
(45) Date of publication and mention of the grant of the patent: **01.08.2007**
(21) Application number: 03792921.3
(22) Date of filing: 18.08.2003
(51) Int. Cl.: B60R 21/231, B60N 2/005, B60N 2/42, B60R 21/02, B60R 21/08

(54) **VEHICLE COMPRISING A SEAT FITTED IN THE TRANSVERSE DIRECTION OF THE VEHICLE**
FAHRZEUG MIT EINEM IN QUERRICHTUNG DES FAHRZEUGS ANGEBRACHTEN SITZ
VEHICULE COMPRENANT UN SIEGE MONTE DANS LE SENS TRANSVERSAL DU VEHICULE

(30) Priority: 21.08.2002 SE 0202468
(43) Date of publication of application: 13.07.2005
(73) Proprietor: VOLVO LASTVAGNAR AB, 405 18 Göteborg (SE)
(72) Inventor: JOHANSSON, Glenn, S-418 71 Göteborg (SE); TORGILSMAN, Ulf, S-443 41 Grabo (SE); HAKANSSON, Alf, S-423 46 Torslanda (SE)
(74) Representative: Ekström, Nils
(86) International application number: PCT/SE2003/001283
(87) International publication number: WO 2004/018266

(56) References cited:
- WO-A1-01/02220
- DE-A1- 4 305 295
- GB-A- 2 341 356
- GB-A- 2 341 358

## Description

### TECHNICAL FIELD

The invention relates to a vehicle comprising a seat fitted in the transverse direction of the vehicle according to the preamble of claim 1. The seat is intended for a passenger traveling sideways.

### BACKGROUND ART

In certain types of vehicle, seats are fitted in the transverse direction of the vehicle, whereby passengers are traveling essentially sideways transversely to the normal direction of travel of the vehicle. On seats of this type a two or three-point seatbelt is usually fitted in order to prevent a passenger being thrown out in the event of a collision occurring. Three-point belts are mainly intended to act in conjunction with a seat structure fitted in the forwards direction of the vehicle. The belt is therefore designed to check the movement of the passenger's upper body in the event of a collision. The design of the belt prevents the passenger's upper body from being thrown or doubled forwards. If the seat is fitted in the transverse direction of the vehicle there is a risk of the passenger slipping out of the three-point belt in the event of a head-on collision.

There is therefore a need to improve the safety of passengers traveling in the transverse direction of the vehicle.

GB 2341 356 comprises the features mentioned in the preamble of claim 1.

### DISCLOSURE OF INVENTION

The object of the invention is to provide a vehicle which affords greater safety for passengers traveling in a seat fitted in the transverse direction of the vehicle for a passenger traveling sideways.

This object is achieved by a vehicle according to the characterizing part of claim 1.

According to the invention the vehicle comprises a restraining structure running in the transverse direction of the vehicle which is arranged in front of and immediately adjacent to the seat in the forwards direction of the vehicle. The restraining structure thus forms a barrier which runs in the transverse direction of the vehicle. The barrier preferably forms an essentially plane wall. The location of the structure ensures that the movement of the passenger's head and upper body are checked by the restraining structure in the event of a collision. The fact that the restraining structure is located immediately adjoining the seat ensures that the relative movement between passenger and restraining structure in the event of a crash remains small. A restraining structure is in this case designed to check the movement of a passenger in the event of a collision.

The term restraining structure relates to a cushioning or solid structure. The term cushioning structure relates to an energy-absorbing structure which in a collision checks the movement of a passenger with sufficient flexibility to meet the side impact standards for passenger cars ECER-95 or FMVSS-214. Suitable materials for the design of a cushioning structure will be well-known to a person skilled in the art. According to various embodiments of the invention the cushioning structure comprises a mesh, an expandable airbag or a surface layer of deformable material. The term solid structure relates to a structure that does not yield significantly under the forces to which the structure is subjected by a passenger in the event of a collision. Solid structures may consist, for example, of wood, Perspex, plastic or sheet metal. The fact that the solid structure is located close alongside the seat ensures that the passenger already has contact with the solid structure right from the initial development of a collision sequence. This reduces the occurrence of hard impacts for the passenger.

In a first preferred embodiment the seat is provided with a first forward slide safeguard arranged on a seat cushion forming part of the seat close alongside the said cushioning structure, the first forward slide safeguard comprising a sloping section which forms an upwardly inclined ramp in the forwards direction of the vehicle. The first forward slide safeguard is in this way designed to check the movement of the passenger's hip in the event of a collision.

In a second preferred embodiment the vehicle is provided with a second threshold-shaped forward slide safeguard which is arranged on the floor of the vehicle and extends in the transverse direction of the vehicle in a leg space located in front of the seat in the transverse direction of the vehicle. The second forward slide safeguard is designed to check the movement of the passenger's feet in the event of a collision.

In an especially preferred embodiment the restraining structure consists of a cushioning structure. The movement of the passenger can thereby be gently checked and restrained.

In an alternative embodiment of the invention the restraining structure consists of a solid structure. In this case it is of the greatest importance that the passenger should sit close up against the solid structure when the passenger assumes a correct sitting position on the seat. Where solid structures are employed, the passenger's shoulder should rest against the solid structure when normally located.

### BRIEF DESCRIPTION OF DRAWINGS

The invention will be described in more detail below with reference to drawings attached, of which
- Fig. 1: shows a top view of a vehicle which is equipped with a seat fitted in the transverse direction of the vehicle,
- Fig. 2: shows a front view of the transversely-fitted seat in Fig. 1, viewed in the direction I
- Fig. 3: shows a perspective view of the transversely-fitted seat in Fig. 1,
- Fig. 4: shows an extendible, flexible layer material, which is designed to be activated by a pyrotechnic deployment device,
- Fig. 5: shows a detail of the pyrotechnic deployment device in Fig. 4, and
- Fig. 6: shows a cross-section of a cushioning structure formed by a solid structure having a surface layer of a deformable material,
- Fig. 7: shows a cross-section of a cushioning structure which consists of a solid structure with a surface-mounted airbag,
- Fig. 8: shows a front view of a transversely-fitted seat in which the cushioning structure consists of an airbag.

### MODE(S) FOR CARRYING OUT THE INVENTION

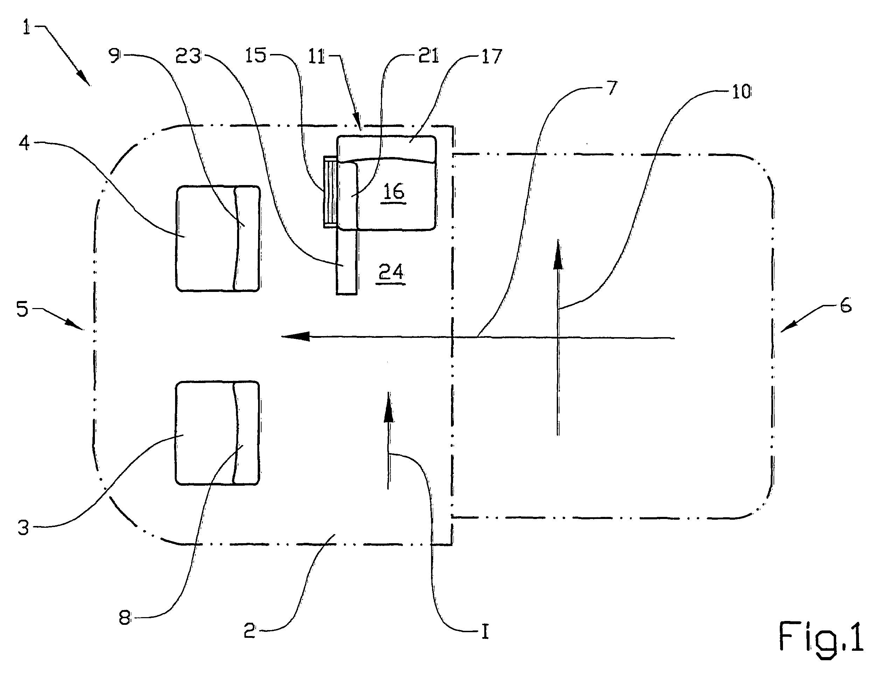

Fig. 1 shows a vehicle 1 viewed from above. In the example shown the vehicle consists of a truck with a cab 2. The vehicle 1 has a front part 5 and a rear part 6. The vehicle 1 thus extends in a longitudinal direction, indicated by the arrow 7, between its rear part 6 and its front part 7. The normal direction of travel of the vehicle corresponds to the longitudinal direction 7 of the vehicle. In the cab 2 a driver's seat 3 and a passenger's seat 4 are conventionally arranged with backrests 8, 9 which face forwards in the longitudinal direction 7 of the vehicle. The vehicle 1 also comprises a seat in the form of a passenger seat 11 arranged in the transverse direction of the vehicle, which is indicated by the arrow 10.

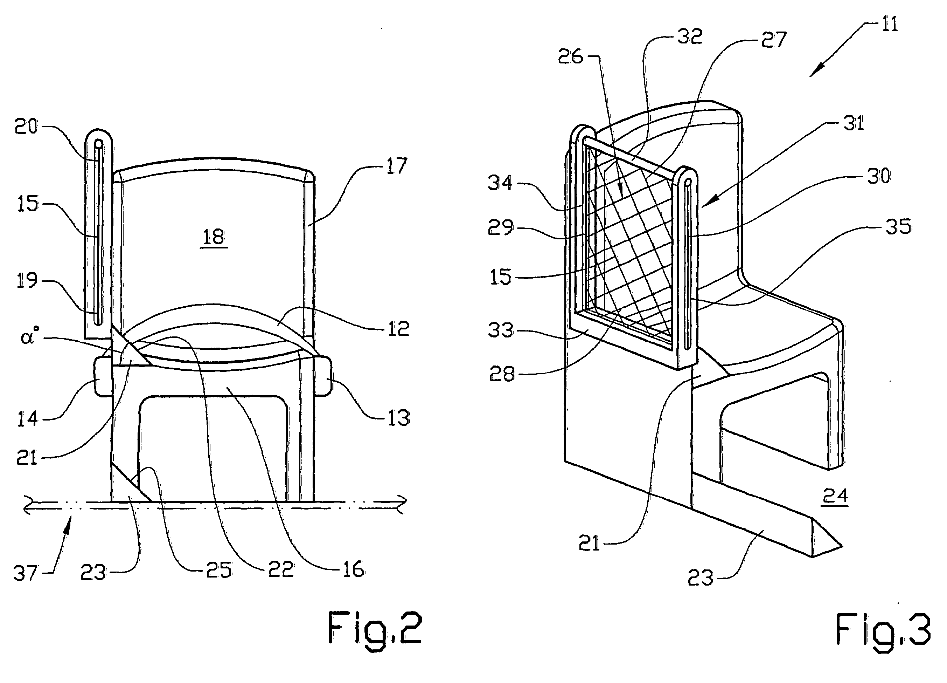

The transversely fitted seat 11 has a seatbelt 12 (Fig. 2) designed for securing a passenger to the seat. The seatbelt is of conventional type and will not be further described. The seatbelt 12 is fixed to the seat in a known manner, or is where necessary fixed to anchoring structures 13, 14 (Fig. 2) arranged at the side of the seat. The term transverse direction generally signifies a direction at right-angles to the longitudinal direction of the vehicle. The term transverse direction also includes slight deviations of less than ±10° from a direction at right-angles to the longitudinal direction of the vehicle.

According to the invention the vehicle 1 furthermore has a restraining structure 15 running in the transverse direction 10 of the vehicle which is arranged in front of and immediately adjacent to the seat 11 in the forwards direction 7 of the vehicle. The term "in front of and immediately adjacent to the seat 11" implies that a passenger sits close alongside the restraining structure 15 when he assumes a correct sitting position on the seat. The restraining structure forms a vertical wall which extends in a vertical direction from what is the front edge of the seat 11 in the direction of the vehicle, or at a short interval preferably of less than 5 cm from the front edge of the seat.

According to what has been stated above, the term restraining structure relates to a cushioning or solid structure. A restraining structure is in this case designed to check the movement of a passenger in the event of a collision. The term cushioning structure relates to an energy-absorbing object which in a collision checks the movement of a passenger with sufficient flexibility to meet the side impact standards for passenger cars ECER-95 or FMVSS-214. Suitable materials for the design of a cushioning structure will be well-known to a person skilled in the art. According to various embodiments of the invention the cushioning structure consists of a mesh, an expandable airbag or a surface layer of deformable material. The term solid structure relates to a structure that does not yield significantly under the forces to which the structure is subjected by a passenger in the event of a collision. Solid structures may consist, for example, of wood, Perspex, plastic or sheet metal.
The restraining structure extends for a distance in the vertical direction of the vehicle which is equal to or preferably somewhat greater than the distance from the passenger's hip to the top of the passenger's head. The restraining structure extends for a distance in the transverse direction of the vehicle which allows the structure to check the movement of the passenger either when the passenger is sitting inclined slightly forwards or when the passenger is resting against a backrest fitted to the seat.

The passenger's shoulder preferably rests against the position of the restraining structure in the normal location. The restraining structure is preferably designed as a cushioning structure. Where the cushioning structure consists of an extendible, flexible layer material, such as a mesh, for example, a woven or knitted fabric, a fiber material or other suitable material, which is designed to be drawn out by means of a pyrotechnic deployment device, the cushioning structure is preferably located at a short distance of between 0.5 and 4 cm from what is the passenger's front shoulder in the direction of the vehicle, thereby reducing the risk of the mesh striking his shoulder when it is drawn out. The cushioning structure 15 is thereby designed to check the movement of the passenger's head and upper body in the event of a collision. The transversely facing seat 11 furthermore has a seat cushion 16 and a backrest 17. Saying that the seat is located in the transverse direction of the vehicle signifies that the backrest 17 has a front surface 18, which essentially faces in the transverse direction of the vehicle. In its vertical extent the cushioning structure 15 comprises at least a lower part 19 adjoining the sitting surface 16 of the seat and an upper part 20, which preferably extends a short distance above the upper part of the backrest 17, so that the cushioning structure is capable of checking the movement of a passenger's head and upper body.

The seat 11 furthermore has a first forward slide safeguard 21 arranged on a seat cushion 16 of the seat close alongside the said cushioning structure 15. The forward slide safeguard 21 preferably extends along the entire length of the seat 16 in the transverse direction 10 and is arranged on an outer part of the seat in the forwards direction 7 of the vehicle. The forward slide safeguard 21 comprises a sloping section 22 (Fig. 2), which forms an upwardly inclined ramp in the forwards direction 7 of the vehicle. In order to afford sufficient resistance to forward sliding, the ramp has an angle α of more than 30° to the horizontal plane. The angle is preferably between 40 and 50°. The vertical extent of the ramp furthermore exceeds 6 cm. The ramp preferably has a height of between 8 and 12 cm. The forward slide safeguard is thereby designed to check the movement of the passenger's hip in the event of a collision.

The vehicle furthermore comprises a second threshold-shaped forward slide safeguard 23, which is arranged on the floor 37 of the vehicle and extends in the transverse direction of the vehicle at a leg space 24 located in front of the seat in the transverse direction of the vehicle. The leg space 24 is conventionally located directly in front of the seat 16. According to one embodiment of the invention, the second forward slide safeguard 23 comprises a sloping section 25, which forms an upwardly inclined ramp in the forwards direction of the vehicle. In order to afford sufficient resistance to forward sliding, the ramp has an angle a of more than 40° to the horizontal plane. The ramp may also be perpendicular to the floor section or be designed with an overhang towards the leg space. The vertical extent of the ramp furthermore exceeds 8 cm. The ramp preferably has a height of between 12 and 16 cm. The second forward slide safeguard is designed to check the movement of the passenger's feet in the event of a collision.

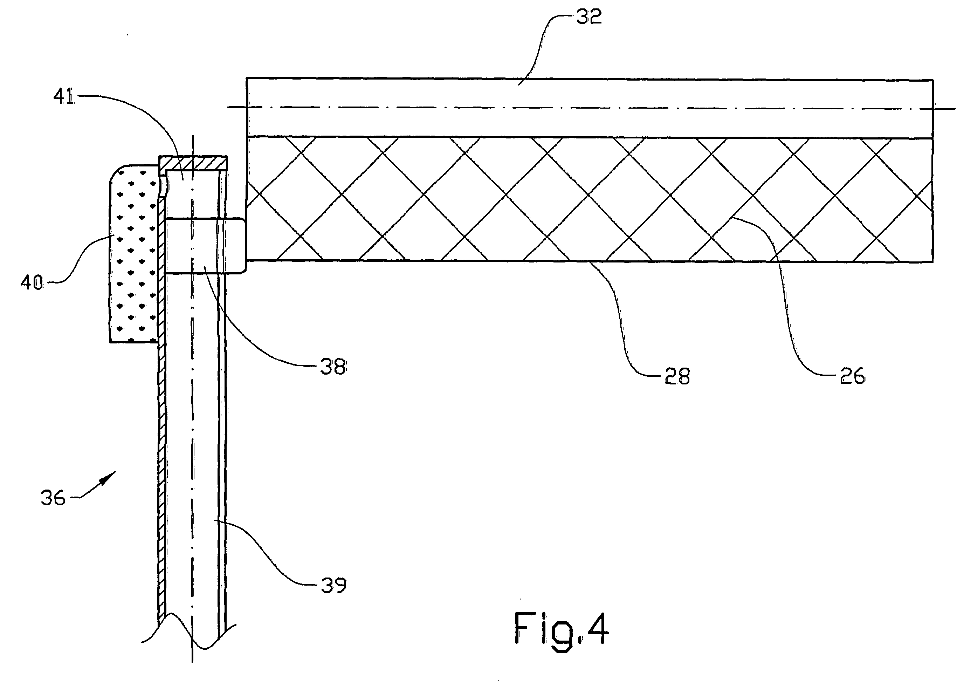

Fig. 3 shows a perspective view of one embodiment of a transversely fitted seat 11 with a cushioning structure 15, which consists of a flexible layer material 26, such as a mesh, a fiber material or a piece of fabric, for example. In the example shown a mesh 26 is used. The mesh 26 has an upper end 27, a lower end 28 and two edge pieces 29, 30. The flexible layer material is deployed in a support frame 31. In its upper part the support frame has a roller blind arrangement 32, which is designed to allow the flexible layer material 26 to be drawn out and fixed to the lower part 33 of the support frame in the deployed position. According to one embodiment, the edge pieces 29, 30 of the flexible layer material can be anchored in guide elements 34, 35, which preferably run vertically. This embodiment is preferred where the roller blind arrangement comprises a pyrotechnic unit 36 (Fig. 4), which is designed to draw the mesh out into a deployed position in the event of a collision. The roller blind arrangement can also be designed to feed out in a horizontal direction.

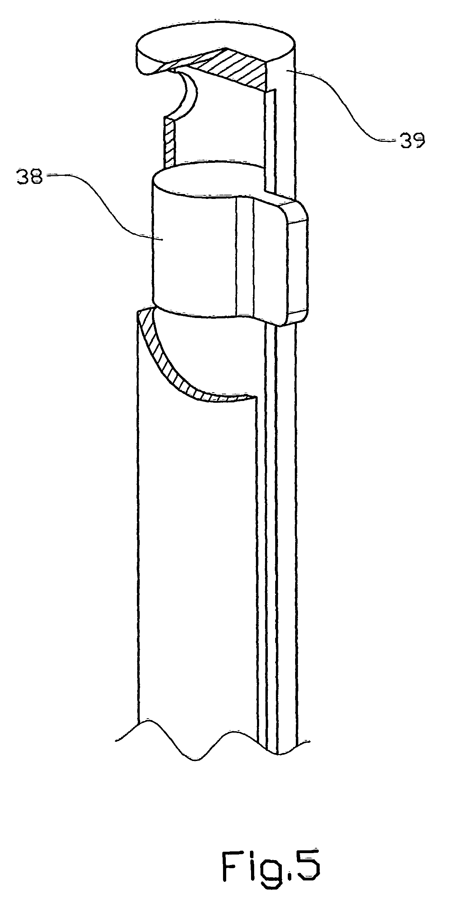

A roller blind arrangement which comprises a pyrotechnic unit 36 designed to draw the mesh out into a deployed position in the event of a collision is shown in more detail in Fig. 4 and 5. Fig. 4 shows a roller blind arrangement 32 which carries a roller blind in the form of a rolled flexible layer material 26. The lower end 28 of the roller blind is fixed to a piston 38 in the pyrotechnic unit 36. The piston 38 is arranged in a partially slotted cylinder 39. A charge 40 is arranged in a known manner in order to supply an enclosed space 41 above the piston 38 with pressurized gas so that the roller blind is drawn out.
Fig. 5 shows a detailed view of the piston 38 and the partially slotted cylinder.

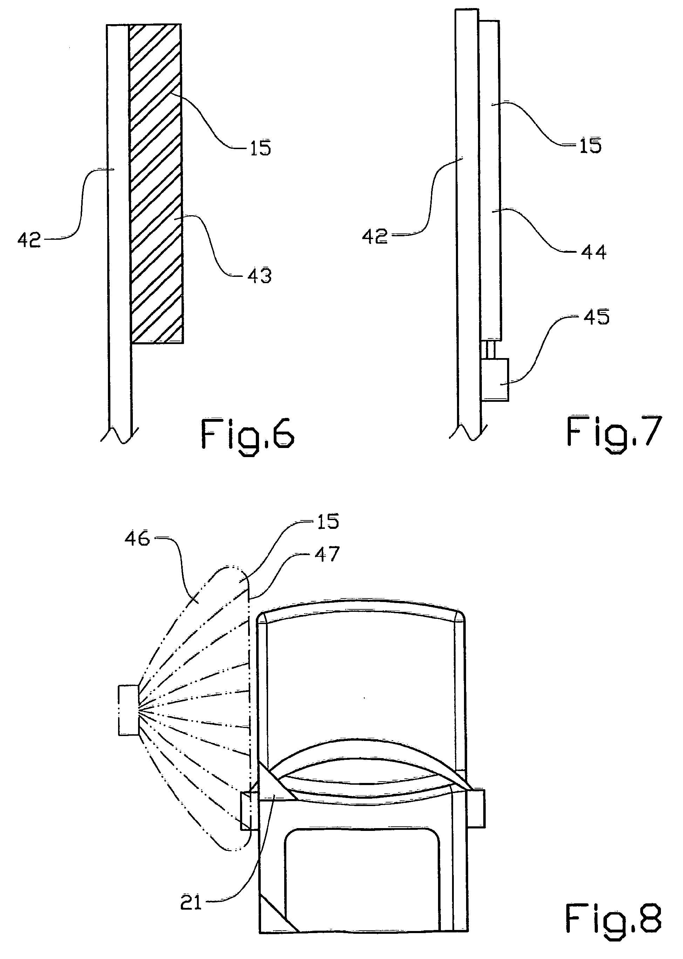

Fig. 6 shows an alternative embodiment of the cushioning structure 15. In this embodiment the cushioning structure 15 comprises an underlying solid structure 42 running in the transverse direction of the vehicle and having a surface layer 43 of a deformable material, which is designed to absorb energy during the deformation.
In one embodiment as shown in Fig. 7 the deformable material consists of an airbag 44, which is expanded by means of pressurized gas from a gas unit 45.

Fig. 8 shows an embodiment of the invention in which the cushioning structure 15 consists of an airbag 46 designed to form a barrier 47, which covers the passenger's upper body and head.

In an alternative embodiment of the invention the restraining structure consists of a solid structure. In this case it is of the greatest importance that the passenger should sit close up against the solid structure when the passenger assumes a correct sitting position on the seat. Where solid structures are employed, the passenger's shoulder should rest against the position of the solid structure in the normal location. This embodiment is similar to the cushioning structure shown in Fig. 6. The embodiment does not have the deformable surface layer shown in Fig. 6. The solid structure is furthermore fitted some distance, essentially equal to the thickness of the deformable surface layer, closer to the seat, so that the passenger sits close up against the solid structure when he assumes a correct sitting position on the seat.

The invention is not limited to the embodiments specified above but can be modified within the scope of the following patent claims. In particular, the invention can be used on all sorts of vehicles with seats fitted in the transverse direction, such as buses, trains, cars, ships and aircraft, for example.

## Claims

1. A vehicle (1) comprising a seat (11), which is fitted in the transverse direction (10) of the vehicle for a passenger traveling sideways, and a seatbelt (12) which is designed for securing said passenger to the seat (11), the vehicle (1) further comprises a restraining structure (15) running in the transverse direction (10) of the vehicle which is arranged in front of and immediately adjacent to the seat (11) in the forwards direction (7) of the vehicle, said restraining structure (15) being designed to check the movement of the passenger's head and upper body in the event of a collision, **characterized in that** the vehicle (1) comprises a second threshold-shaped forward slide safeguard (23), which is arranged on the floor (37) of the vehicle and extends in the transverse direction (10) of the vehicle in a leg space (24) located in front of the seat (11) in the transverse direction (10) of the vehicle, said second forward slide safeguard (23) being designed to check the movement of the passenger's feet in the event of a collision.

2. The vehicle as claimed in claim 1, **characterized in that** the seat (11) has a first forward slide safeguard (21) arranged on a seat cushion (16) forming part of the seat close alongside the said restraining structure (15), wherein the forward slide safeguard (21) comprises a sloping section (22) which forms an upwardly inclined ramp in the forwards direction (7) of the vehicle, said forward slide safeguard being designed to check the movement of the passenger's hip in the event of a collision.

3. The vehicle as claimed in claim 1, **characterized in that** the second forward slide safeguard (23) comprises a sloping section (25), which forms an upwardly inclined ramp in the forwards direction of the vehicle.

4. The vehicle as claimed in any one of claims 1 to 3, **characterized in that** said restraining structure consists of a cushioning structure (15).

5. The vehicle as claimed in claim 4, **characterized in that** said cushioning structure (15) consists of a flexible sheet material (26), such as a mesh, a fiber material or a piece of fabric, for example.

6. The vehicle as claimed in claim 5, **characterized in that** said flexible sheet material (26) is extendibly arranged in a roller blind structure (32).

7. The vehicle as claimed in claim 6, **characterized in that** the vehicle comprises a pyrotechnic unit (36) which is designed to draw the flexible layer material (26) out into a deployed position in the event of a collision.

8. The vehicle as claimed in claim 4, **characterized in that** said cushioning structure (15) is constructed from an underlying solid structure (42) running in the transverse direction of the vehicle and having a surface layer (43) of deformable material, which is designed to absorb energy during deformation of the material

9. The vehicle as claimed in claim 8, **characterized in that** said deformable material (43) consists of an airbag.

10. The vehicle as claimed in claim 4, **characterized in that** said cushioning structure (15) consists of an airbag (46).

11. The vehicle as claimed in any one of claims 1 to 3, **characterized in that** said restraining structure (15) consists of a solid structure (40) running in the transverse direction of the vehicle, in which said solid structure is located in relation to said seat (11) so that a passenger sits close alongside and with a shoulder resting against the solid structure (40) when the passenger assumes a sitting position on the seat (11) dictated by the seatbelt (12).

## Patentansprüche

1. Fahrzeug (1) mit einem Sitz (11), der in der Querrichtung (10) des Fahrzeugs für einen seitwärts reisenden Passagier angeordnet ist, und einem Sicherheitsgurt (12), der derart ausgebildet ist, dass er den Passagier an den Sitz (11) sichert, wobei das Fahrzeug (1) ferner eine Rückhaltestruktur (15) umfasst, die sich in der Querrichtung (10) des Fahrzeugs erstreckt, und die vor und unmittelbar neben dem Sitz (11) in der Vorwärtsrichtung (7) des Fahrzeugs angeordnet ist, wobei die Rückhaltestruktur (15) derart ausgebildet ist, dass sie die Bewegung des Kopfes und des Oberkörpers des Passagiers im Falle einer Kollision hemmt,
**dadurch gekennzeichnet, dass**
das Fahrzeug (1) eine zweite schwellenförmige Vorwärtsgfeit-Schutzvorrichtung (23) umfasst, die an dem Boden (37) des Fahrzeugs angeordnet ist und sich in der Querrichtung (10) des Fahrzeugs in einem Beinraum (24) erstreckt, der vor dem Sitz (11) in der Querrichtung (10) des Fahrzeugs angeordnet ist, wobei die Vorwärtsgleit-Schutzvorrichtung (23) derart ausgebildet ist, dass sie die Bewegung der Füße des Passagiers im Falle einer Kollision hemmt.

2. Fahrzeug nach Anspruch 1, **dadurch gekennzeichnet, dass** der Sitz (11) eine erste Vorwärtsgleit-Schutzvorrichtung (21) umfasst, die an einem Sitzpolster (16), das einen Teil des Sitzes bildet, entlang der Rückhaltestruktur (15) angeordnet ist, wobei die Vorwärtsgleit-Schutzvorrichtung (21) einen geneigten Abschnitt (22) aufweist, der eine aufwärts geneigte Rampe in der Vorwärtsrichtung (7) des Fahrzeugs bildet, wobei die Vorwärtsgleit-Schutzvorrichtung derart ausgebildet ist, dass sie die Bewegung der Hüfte des Passagiers im Falle einer Kollision hemmt.

3. Fahrzeug nach Anspruch 1, **dadurch gekennzeichnet, dass** die Vorwärtsgleit-Schutzvorrichtung (23) einen geneigten Abstand (25) umfasst, der eine aufwärts geneigte Rampe in der Vorwärtsrichtung des Fahrzeugs bildet.

4. Fahrzeug nach einem der Ansprüche 1 bis 3, **dadurch gekennzeichnet, dass** die Rückhaltestruktur aus einer polsternden Struktur (15) gebildet wird.

5. Fahrzeug nach Anspruch 4, **dadurch gekennzeichnet, dass** die polsternde Struktur (15) aus einem flexiblen bahnförmigen Material (26) gebildet ist, wie beispielsweise ein Netz, ein Fasermaterial oder ein Gewebestück.

6. Fahrzeug nach Anspruch 5, **dadurch gekennzeichnet, dass** das flexible bahnförmige Material (26) ausdehnbar in einer Rollostruktur (32) angeordnet ist.

7. Fahrzeug nach Anspruch 6, **dadurch gekennzeichnet, dass** das Fahrzeug eine pyrotechnische Einheit (36) aufweist, die derart ausgebildet ist, dass sie das flexible bahnförmige Material (26) in eine Verwendungsposition im Falle einer Kollision auszieht.

8. Fahrzeug nach Anspruch 4, **dadurch gekennzeichnet, dass** die polsternde Struktur (15) aus einer festen Struktur (42) ausgebildet ist, die sich in der Querrichtung des Fahrzeugs erstreckt und eine Flächenschicht (43) aus einem deformierbaren Material aufweist, die dazu ausgelegt ist, Energie während einer Deformation des Materials zu absorbieren.

9. Fahrzeug nach Anspruch 8, **dadurch gekennzeichnet, dass** das deformierbare Material (43) aus einem Airbag besteht.

10. Fahrzeug nach Anspruch 4, **dadurch gekennzeichnet, dass** die polsternde Struktur (15) aus einem Airbag (46) ausgebildet ist.

11. Fahrzeug nach einem der Ansprüche 1 bis 3, **dadurch gekennzeichnet, dass** die Rückhaltestruktur (15) aus einer festen Struktur (40) gebildet wird, die sich in der Querrichtung des Fahrzeugs erstreckt, wobei die feste Struktur relativ zu dem Sitz (11) angeordnet ist, so dass ein Passagier nahe entlang der festen Struktur (40) sitzt und mit einer Schulter gegen die feste Struktur (40) ruht, wenn der Passagier eine Sitzposition auf dem Sitz (11) einnimmt, die durch den Sicherheitsgurt (12) bestimmt wird.

## Revendications

1. Véhicule (1) comportant un siège (11), qui est agencé dans la direction transversale (10) du véhicule pour un passager voyageant de côté, et une ceinture de sécurité (12) qui est conçue pour attacher ledit passager sur le siège (11), le véhicule (1) comporte en outre une structure de retenue (15) s'étendant dans la direction transversale (10) du véhicule, qui est agencée devant le siège (11), et immédiatement adjacente à celui-ci, dans la direction vers l'avant (7) du véhicule, ladite structure de retenue (15) étant conçue pour contrôler le déplacement de la tête et du torse du passager en cas de collision, **caractérisé en ce que** le véhicule (1) comporte une seconde protection coulissant vers l'avant en forme de seuil (23), qui est agencé sur le plancher (37) du véhicule et s'étend dans la direction transversale (10) du véhicule dans un espace de jambes (24) situé devant le siège (11) dans la direction transversale (10) du véhicule, ladite seconde protection coulissant vers l'avant (23) étant conçue pour contrôler le déplacement des pieds du passager en cas de collision.

2. Véhicule selon la revendication 1, **caractérisé en ce que** le siège (11) a une première protection coulissant vers l'avant (21) agencée sur un coussin de siège (16) formant une partie du siège à proximité et à côté de ladite structure de retenue (15), dans lequel la protection coulissant vers l'avant (21) comporte un tronçon en pente (22) qui forme un rampe inclinée vers le haut dans la direction vers l'avant (7) du véhicule, ladite protection coulissant vers l'avant étant conçue pour contrôler le déplacement de la hanche du passager en cas de collision.

3. Véhicule selon la revendication 1, **caractérisé en ce que** la seconde protection coulissant vers l'avant (23) comporte un tronçon en pente (25) qui forme une rampe inclinée vers le haut dans la direction vers l'avant du véhicule.

4. Véhicule selon l'une quelconque des revendications 1 à 3, **caractérisé en ce que** ladite structure de retenue est constituée d'une structure de rembourrage (15).

5. Véhicule selon la revendication 4, **caractérisé en ce que** ladite structure de rembourrage (15) est constituée d'un matériau en feuille souple (26), telle qu'un filet, un matériau de fibres ou une pièce de tissu, par exemple.

6. Véhicule selon la revendication 5, **caractérisé en ce que** ledit matériau en feuille souple (26) est agencé de manière étendue dans une structure de volet roulant (32).

7. Véhicule selon la revendication 6, **caractérisé en ce que** le véhicule comporte une unité pyrotechnique (36) qui est conçue pour attirer le matériau en couche souple (26) vers l'extérieur dans une position déployée en cas de collision.

8. Véhicule selon la revendication 4, **caractérisé en ce que** ladite structure de rembourrage (15) est construite à partir d'une structure solide sous-jacente (42) s'étendant dans la direction transversale du véhicule, et ayant une couche de surface (43) de matériau pouvant être déformé, qui est conçue pour absorber une énergie pendant une déformation du matériau

9. Véhicule selon la revendication 8, **caractérisé en ce que** ledit matériau pouvant être déformé (43) est constitué d'un coussin gonflable de sécurité.

10. Véhicule selon la revendication 4, **caractérisé en ce que** ladite structure de rembourrage (15) est constituée d'un coussin gonflable de sécurité (46).

11. Véhicule selon l'une quelconque des revendications 1 à 3, **caractérisé en ce que** ladite structure de retenue (15) est constituée d'une structure solide (40) s'étendant dans la direction transversale du véhicule, dans lequel ladite structure solide est située par rapport audit siège (11) de sorte qu'un passager s'assoit à proximité et à côté de la structure solide (40), et en ayant une épaule qui est en appui contre celle-ci, lorsque le passager prend une position d'assise sur le siège (11) dictée par la ceinture de sécurité (12).
